Europäisches Patentamt

European Patent Office

Office européen des brevets

(11) Publication number: **0 213 658**
**A1**

## (12) EUROPEAN PATENT APPLICATION

(21) Application number: 86201331.5

(22) Date of filing: 28.07.86

(51) Int. Cl.⁴ **B23B 13/08**

(30) Priority: 21.08.85 IT 2195785

(43) Date of publication of application:
11.03.87 Bulletin 87/11

(84) Designated Contracting States:
AT BE CH DE FR GB IT LI LU NL SE

(71) Applicant: Cucchi, Giovanni
Via Genova, 4
I-20060 Bussero (Milano)(IT)

(72) Inventor: Cucchi, Giovanni
Via Genova, 4
I-20060 Bussero (Milano)(IT)

(74) Representative: Martegani, Franco et al
Ingg. GUZZI e RAVIZZA S.r.l. Via Boccaccio,
24
I-20123 Milano(IT)

(54) Improved apparatus for feeding a bar to a machine tool.

(57) The invention relates to an apparatus for supporting a bar or the like fed to a machine tool, for example a single-spindle lathe, the apparatus comprising a flexible member (13) translatable endlessly and movable between a first position out of the feed path of the bar (26) and of the relative bar-pusher device (25) and a second position in which the flexible member (13) forms a cradle (27) as a seat for the bar or the like (26).

Fig.1

EP 0 213 658 A1

## "IMPROVED APPARATUS FOR FEEDING A BAR TO A MACHINE TOOL"

The present invention relates to an improved apparatus for supporting a bar or the like fed to a machine tool, for example a single-spindle lathe.

As is known to persons with ordinary skill in the art, such apparatus are disposed as several in line units between the machine tool and a bar-pusher device acting on the rear end of the bar. The function of the said apparatus is to support the rotating bar both during processing and during the stepwise feed used to bring the next workpiece into position for processing by the machine tool.

One of the technical problems to be solved in designing apparatus of the type in question arises from the inteference existing between the bar-pusher device and each apparatus during the stepwise feeding of the bar, from the commencement of processing until its completion.

For the apparatus has to be so designed as to support the bar being processed in a centered manner and so as to permit the bar-pusher device, advancing stepwise, to proceed as the processing of the bar continues. Apparatus of known type which meet the aforementioned requirements are constructionally complex and therefore costly both to produce and maintain.

One object of the present invention is to provide an apparatus that will permit the stepwise advancing bar-pusher device to proceed and which, through dependable in operation, is constructionally very straightforward and therefore economical.

Another object of the invention is to provide a bar support device which satisfactorily supports the bar even at high rotation speeds and even if the section of the bar is not circular (for example prismatic), without inadmissible stresses and vibrations being set up.

To attain the said object, the present invention provides an apparatus for feeding a bar (26) to a machine tool (24), the apparatus being intended to be disposed between a bar-pusher device (25) and the machine tool (24) and comprising a frame (11) bearing at its summit suppert means for a bar (26) intended to rotate and to be fed stepwise, wherein the support means comprises a flexible member - (13) which can be moved between a first position outside the feed path of the bar (26) and of the relative bar-pusher device (25) and a second position in which the flexible member (13) forms a cradle (27) as a seating for the bar (26), the flexible member (13) also being translatable in ring belt manner.

The structural and functional characteristics of the invention, and its advantages over the known art, will become more apparent from an examination of the following illustrative description, referred to the appended diagrammatic drawings which show exemplifying forms of embodiment of the invention. In the drawings:

Figure 1 is a vertical section taken on the line I-I in Figure 2, illustrating a bar feeding apparatus and a machine tool actuated according to a first form of embodiment of the invention;

Figure 2 is a section taken on the line II-II of Figure 1;

Figure 3 shows a plurality of apparatus according to the invention disposed in line during feeding of a bar to a machine tool;

Figure 4 is a view as in Figure 1, but illustrating another form of embodiment of the invention.

With reference to the drawings, the apparatus according to the invention is indicated overall by 10 and consists structurally of a frame 11 bearing at its summit a support 12 having a "U"-shaped cross-section.

On the support 12 there is mounted a variable-configuration flexible member 13, consisting for example of a group of chains 14 in side-by-side arrangment which rotate in endless or ring belt configuration about a wheel 15 and about a pair of movable gearwheels 16, which wheels 15 and 16 all lie in the same vertical plane.

The wheel 15 is received between the wings of the "U"-shaped support 12 and is mounted in a freely rotatable manner on a pin 9 carried radially at the summit of the stem 17 of a jack 18.

By operating the jack 18 it is thus possible to adjust the heightwise position of the wheel 15.

The wheels 16, which are also freely rotatable, are pivoted to the free ends of respective arms 19, the opposed ends of which are solid with the pins 20 projecting from the support 12, on which they rotate through the intermediary of bearings.

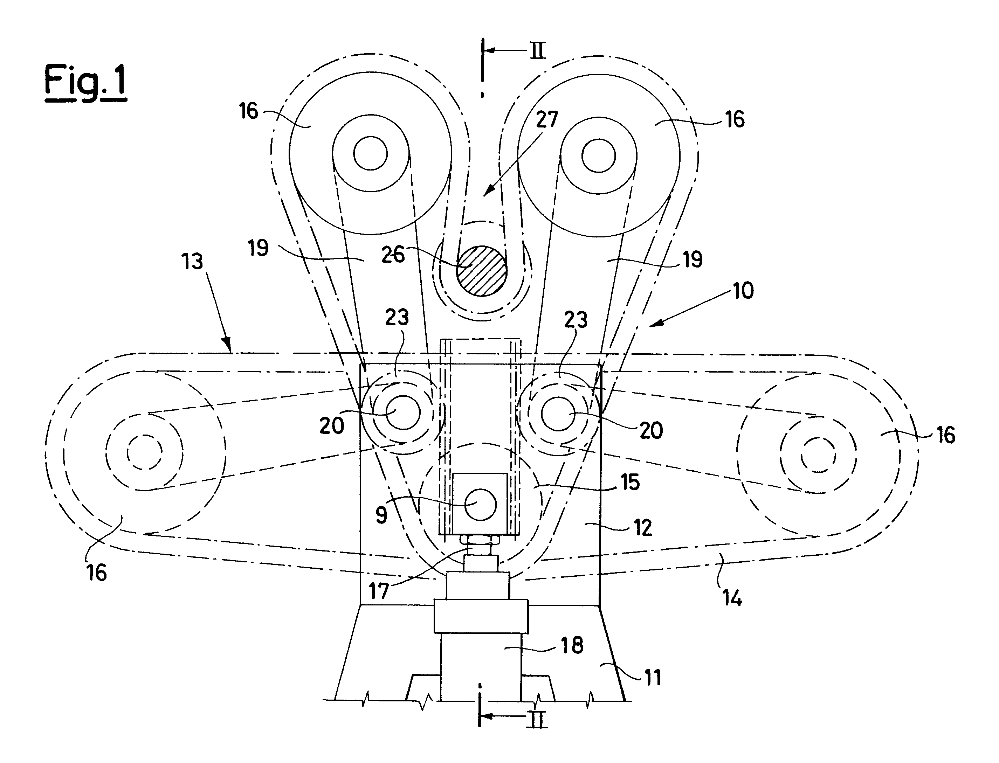

The arm 19 are in consequence each able to be swung, in total reciprocal synchronism, between the two lowered and raised positions shown in Figure 1 by broken and solid lines respectively. The oscillation of the arms 19 can be controlled for example by a single central jack 21, from the stem of which there extends a double rack 22 engaging the pinions 23 solid with the arms 19.

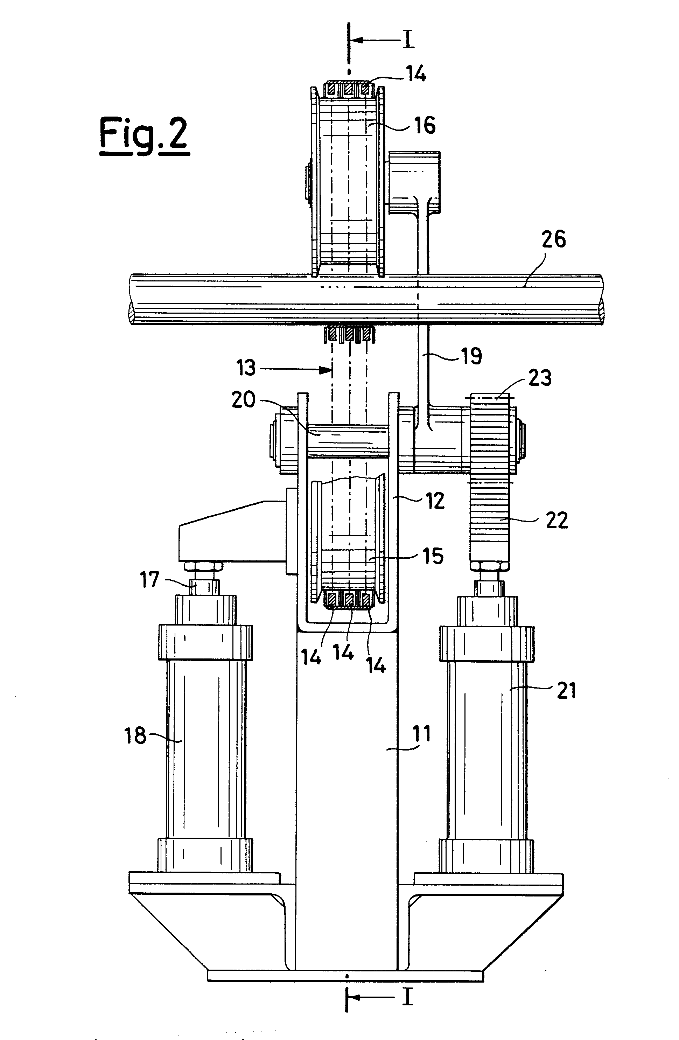

The mode of operation of the apparatus according to the invention is clearly described above with reference to the Figures 1-3, and it is as follows.

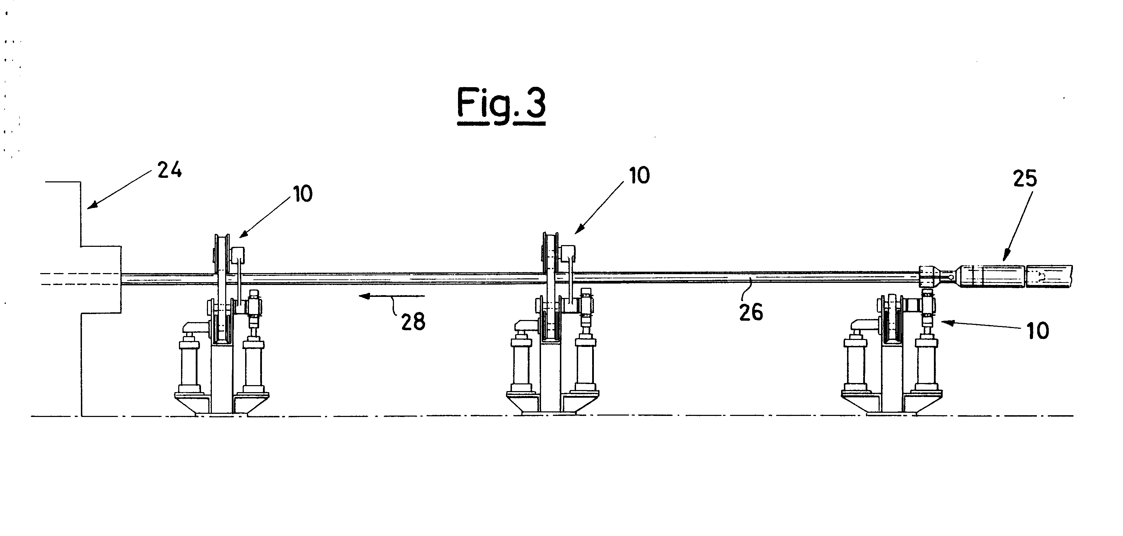

As appears from Figure 3 of the drawings, a plurality of appratus 10 according to the invention, for example three, are disposed in line between a machine tool diagrammatical indicated at 24 and a bar-pusher device diagrammatically indicated at 25. The machine tool 24 can for instance be a lathe, and the bar-pusher device 25 can be of any of the types known to person with ordinary skill in the art.

When the machine tool is in the operating condition a rotating bar 26 is supported by the chains 14 of the apparatus 10 disposed in the raised position as shown by the dotted and dashed line in Figure 1, in which the branch between the pairs of wheels 16 forms a loop or cradle 27 in which the rotating bar 26 has its seating, which bar 26 also freely entrains into rotation the chains 14.

It will be evident that in this manner the bar is supported in a freely floating way between the cradles 27, and this fact prevents undesired flutter or chatter, insuring a smooth and noiseless feeding of the bar to the machine tool.

The heightwise adjustment of the wheel 15 makes it possible to vary the tension of the flexible member 13 so as correspondingly to vary the position in which the loop or cradle 27 is formed, and therefore to determine with exactitude the position in which the bar is supported, in relation also to its diameter.

On completion of the processing of each workpiece by the machien tool, when the bar has to be moved forward by one step in the direction of the arrow 28 in order to bring a successive workpiece into the processing position, interference of the apparatus 10 with the advancing bar-pusher is eliminated by bringing the chains 14 into the lowered position shown in Figure 1 by broken lines.

Provision can of course also be made for a sensor device for sensing the presence of the bar-pusher device, which sensor device automatically controls the lowering of the rollers and therefore the withdrawal of the flexible member 13 when the bar-pusher device comes into the vicinity of each of the apparatus 10.

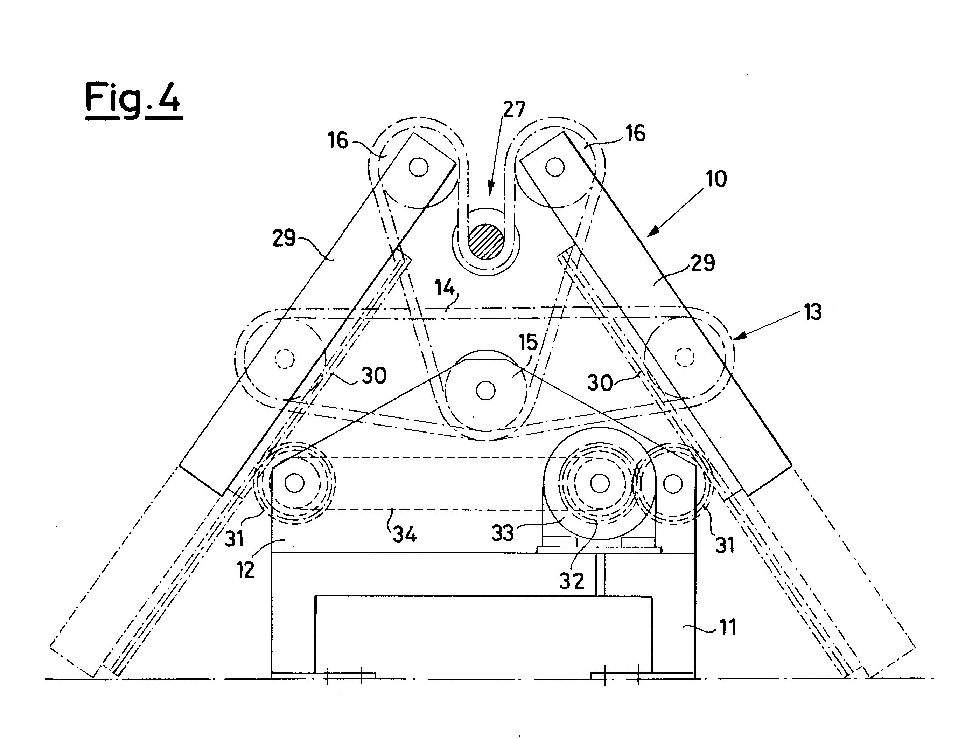

Figure 4 illustrates one of the possible variants of the apparatus, in which the wheels 16 are pivoted to one end of slides 29 guided to slide between the raised and lowered positions shown in the drawing by solid and dotted and dashed lines respectively. The translation of each slide 29 is controlled through the intermediary of a rack-type linkage 30 and pinion 31. The rack can be solid with the slide 29, while the pinion 31 is pivoted to the frame 11 of the apparatus.

One of the two pinions 31 engages an actuating pinion 32 controlled by a geared motor 33. A chain transmission 31 insures the indirect transmission of motion from pinion 32 to the other pinion 31.

In this embodiment the position of the loop 27 can be varied by limiting the external position of the upward run of the slides 29.

It is clearly possible to provide for other linkages for varying the position of the upper rollers, so as to take the flexible member out of the trajectory of the bar-pusher device, as variants of what has been heretofore described by way of example.

The flexible member 13 can linkewise be of different form and nature, and in particular can be of the endless type such as a belt, or of chain type with a surface adapted to receive the bar rolling on it.

It is in any case evident that the device according to the invention adapts to guiding bars of different diameter without substitution of parts, by adjustment of the position of the wheels 15 and 16 during operations and by corresponding adjustement of the loop formed by the flexible member.

Another fundamental advantage of the apparatus according to the invention is the rolling support of the bar on the flexible member, which makes it possible to prevent damage being caused even to polygonal section bars made of relatively soft material.

## Claims

1) An apparatus for feeding a bar (26) to a machine tool (24), the apparatus being intended to be disposed between a bar-pusher device (25) and the machine tool (24), and comprising a frame (11) bearing at its summit support means for a bar (26) intended to rotate and to fed stepwise, wherein the said support means comprises a flexible member 13 which can be moved between a first position outside the feed path of the bar (26) and of the relative bar-pusher device (25) and a second position in which the flexible member (13) forms a cradle (27) as a seating for the bar (26), the flexible member (13) also being translatable in ring belt manner.

2) An apparatus as described in claim 1, wherein the flexible member (13) in the said first position comes to be stretched below the bar (26), separate from it, while in the said second position the flexible member (13) is slack, so as to form the cradle (17).

3) An apparatus as described in claim 1, wherein the flexible member (13) rotates about three transmission members lying in the same vertical plane, one of these (15) being stationary and two (16) movable, the stationary member (15) being mounted centrally at the summit of the frame - (11) whereas the movable members (16) are mounted laterally to the stationary member and can be moved between a first lowered position in which the flexible member (13) is outside the feed path of the bar (26) and of the relative bar-pusher device - (25), and a second raised position in which the flexible member (13) forms the cradle (27).

4) An apparatus as described in claim 3, wherein the movable members (16) are mounted at the free end of respective arms (19) which are pivoted to the opposed end of the frame (11), an actuator being provided for moving the arms (19) between the said lowered and raised positions.

5) An apparatus as described in claim 4, wherein the said actuator consists of a pinion (23) and rack (22) linkage, the pinions (23) being solid with the arms (19), while the racks (22) are solid with the stem of a control jack (21).

6) An apparatus as described in claim 3, wherein the movable members (16) are mounted on respective slides (24) guided to slide between the said raised and lowered positions through the intermediary of actuators.

7) An apparatus as described in claim 6, wherein the said actuators comprise rack (30) and pinion (31) type linkages.

8) An apparatus as desccribed in claim 3, wherein the stationary member (15) is mounted in a heightwise adjustable manner at the end of the stem of a jack (18).

9) An apparatus as described in claim 1, wherein the flexible member (13) comprises a set of chains (14) in side-by-side arrangement translating endlessly or chain gearwheels (15, 16).

Fig.1

# Fig.2

# Fig.3

0 213 658

Fig.4

| Category | Citation of document with indication, where appropriate, of relevant passages | Relevant to claim | CLASSIFICATION OF THE APPLICATION (Int. Cl.4) |
|---|---|---|---|
| | **DOCUMENTS CONSIDERED TO BE RELEVANT** | | EP 86201331.5 |
| X | DE - A1 - 2 836 034 (HAGENUK) | 1 | B 23 B 13/08 |
| A | * Fig. 2,3 * | 2,3 | |
| | -- | | |
| A | US - A - 4 417 491 (VEHARA) | 1 | |
| | * Fig. 1 * | | |
| | -- | | |
| A | DE - A1 - 2 823 044 (SPRADOW) | | |
| | ---- | | |

TECHNICAL FIELDS
SEARCHED (Int. Cl.4)

B 23 B 9/00
B 23 B 13/00

The present search report has been drawn up for all claims

| Place of search | Date of completion of the search | Examiner |
|---|---|---|
| VIENNA | 12-11-1986 | LEBZELTERN |